# EUROPÄISCHE PATENTSCHRIFT

(11) **EP 2 766 627 B1**
(45) Veröffentlichungstag und Bekanntmachung des Hinweises auf die Patenterteilung: **14.06.2017**
(21) Anmeldenummer: 12767020.6
(22) Anmeldetag: 04.10.2012
(51) Int. Cl.: F16D 65/56, F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 10.10.2011 DE 102011115466
(43) Veröffentlichungstag der Anmeldung: 20.08.2014
(73) Patentinhaber: KNORR-BREMSE Systeme für Nutzfahrzeuge GmbH, 80809 München (DE)
(72) Erfinder: WEBER, Ralf, 80992 München (DE); KLINGNER, Matthias, 82272 Moorenweis (DE)
(86) Internationale Anmeldenummer: PCT/EP2012/069660
(87) Internationale Veröffentlichungsnummer: WO 2013/053638

(56) Entgegenhaltungen:
- EP-A1- 0 555 682
- DE-A1- 3 716 202
- DE-A1- 3 937 289
- DE-A1- 4 034 165

## Beschreibung

Die Erfindung betrifft eine Scheibenbremse für ein Nutzfahrzeug nach dem Oberbegriff des Anspruchs 1.

In der DE 94 22 342 U1 ist eine Scheibenbremse offenbart, die einen Drehhebel aufweist, der bei Betätigung auf eine in einem Bremssattel positionierte Brücke einwirkt. Darin sind zwei Stellspindeln gelagert, die als Gewinderohre ausgebildet sind, deren Außengewinde in ein Innengewinde der Brücke eingreift.

Jede Stellspindel weist ein Druckstück auf, mit dem ein aus einer Belagträgerplatte und einem daran befestigten Reibbelag bestehender Bremsbelag bei einer Bremsung an eine Bremsscheibe angedrückt wird.

Mit einer Nachstelleinrichtung, die einer der Stellspindeln zugeordnet ist, wird durch Verdrehen der beiden Stellspindeln bei Verschleiß des Reibbelages der Bremsbelag so weit zugestellt, dass ein Lüftspiel zwischen dem Bremsbelag und der Bremsscheibe im Wesentlichen immer konstant bleibt. Hierzu wird ein in einer der Stellspindeln angeordneter Nachsteller über ein Antriebselement vom Bremshebel angetrieben.

Da jedoch dieser Nachsteller lediglich in einer Stellspindel positioniert ist, die Nachstellung des Bremsbelages jedoch gleichmäßig erfolgen soll und damit auch die zweite Stellspindel entsprechend verstellt werden muss, ist ein vorzugsweise formschlüssiger Zugmitteltrieb vorgesehen, der die Drehbewegung der einen Stellspindel auf die andere synchron überträgt. Als Zugmittel kommt beispielsweise eine Gliederkette zum Einsatz, die auf Kettenrädern der Stellspindeln umlaufend geführt ist. Bekannt ist auch der Einsatz eines Zahnriemens oder eines Lochbandes, die dann in Eingriff mit Zahnrädern stehen.

Bei der bekannten Konstruktion ist der Zugmitteltrieb, also die Synchroneinrichtung, außerhalb des Bremssattels angeordnet. Um sowohl die Synchroneinrichtung vor Witterungseinflüssen zu schützen als auch, um Durchtrittsöffnungen im Bremssattel hin zu den Stellspindeln abzudichten, ist dabei ein die Synchroneinrichtung überdeckender Verschlussdeckel vorgesehen.

Zu dessen Befestigung, aber auch zur Abdichtung gegenüber dem Bremssattel sind relativ aufwändige Maßnahmen erforderlich, die nur mit entsprechend kostenintensiven Fertigungsschritten realisierbar sind.

Darüber hinaus baut die Synchroneinrichtung und der diese überdeckende Verschlussdeckel auf den Bremssattel auf und steht somit einer weiteren Minimierung der Baumaße entgegen.

Um die Baumaße zu verringern, wird in der EP 1 610 024 B1 vorgeschlagen, die Synchroneinrichtung auf der dem aktionsseitigen Bremsbelag zugewandten Seite vor der Brücke anzuordnen. Damit wird zwar eine Baulängenverkürzung der Scheibenbremse erreicht, aber nur unter Inkaufnahme einer deutlichen Verkürzung der Brücke, deren Belastbarkeit damit stark verringert wird.

Es ist aus der DE 37 16 202 A1schließlich auch bekannt, die Synchroneinrichtung auf der vom Bremsbelag abgewandten Seite der Brücke, aber dennoch im Sattel anzuordnen.

In der DE 40 34 165 A1, der EP 0 555 682 A1 sowie der DE 39 37 289 A1 ist jeweils eine Synchroneinrichtung offenbart, mit einem Zugmittel, insbesondere einem Zahnriemen, das unmittelbar an den Stellspindeln angreift, die dazu mit einer Verzahnung versehen sind.

Dabei ist das Zugmittel der dem zuspannseitigen Bremsbelag abgewandten Seite der Brücke angeordnet, wo es sich an den dortigen Stirnseiten abstützt.

Der Erfindung liegt die Aufgabe zugrunde, eine Scheibenbremse der eingangs genannten gattungsgemäßen Art so weiterzuentwickeln, dass die Synchroneinrichtung besonders gut geschützt innerhalb des Bremssattels untergebracht wird.

Diese Aufgabe wird durch eine Scheibenbremse mit den Merkmalen des Anspruchs 1 gelöst.

Die Erfindung löst sich von dem bisher realisierten Konstruktionsprinzip, die Synchroneinrichtung außerhalb der Brücke anzuordnen. Sie wendet sich zu dem von dem Vorschlag ab, die Synchroneinrichtung zwischen der Brücke und dem aktionsseitigen Bremsbelag abzuordnen, um zwingend eine Bauraumkürzung zu erreichen, da die Verkürzung der Brücke als nachteilig gesehen wird.

Die Synchroneinrichtung wird vielmehr mit wenigstens einem Getriebeelement (oder mehreren Getriebeelementen oder sogar ganz mit sämtlichen Getriebeelementen) besonders gut geschützt ganz oder teilweise gut durch die Brücke selbst geschützt in wenigstens einer Ausnehmung derselben angeordnet.

Vorzugsweise wird lediglich im Lagerbereich der Stellspindeln jeweils ein Querschlitz ausgespart, der geringfügig breiter ist als die Dicke des eingefügten Treibrades, dessen Durchmesser um so viel größer ist als das zugeordnete Abmaß der Brücke, dass ein Freilauf des in die Treibräder eingreifenden Zugmittels gewährleistet ist, ebenso wie ein Freilauf der Treibräder selbst.

Die Brücke der neuen Scheibenbremse kann in ihrer Länge jener entsprechen, wie sie aus dem gattungsgemäßen Stand der Technik bekannt ist, bei dem die Synchroneinrichtung außerhalb des Bremssattels angeordnet ist. Dabei kann das Außengewinde der als Gewinderohre ausgebildeten Stellspindeln in gleicher Länge mit dem Innengewinde der Brücke in Eingriff stehen, lediglich um die Breite des Querschlitzes reduziert, d.h., die Belastbarkeit der Brücke ist hier sogar im Wesentlichen unverändert.

Nach einem anderen Gedanken lagern die Stellspindeln in dem dem Bremsbelag zugewandten Bereich der Brücke mit einem gewindefreien Abschnitt, wobei die zugeordneten Aufnahmebohrungen der Brücke ebenfalls gewindefrei im Sinne eines Gleitlagers gestaltet sind.

Es ist alternativ auch denkbar, die Brücke gegenüber dem gattungsgemäßen Stand der Technik sogar etwas zu verlängern. Da aber vorzugsweise lediglich die relativ schmalen Treibräder in Schlitze in der Brücke eingreifen, wird die Stabilität der Brücke durch die Schlitze im Wesentlichen nicht nachteilig beeinflusst.

Durch die Positionierung der Synchroneinrichtung in der Brücke kann gegenüber den gattungsgemäßen Stand der Technik auch auf den Einsatz eines außenseitigen Verschlussdeckels verzichtet werden und in der Folge auf bisher notwendige Dichtungsmaßnahmen im Bremssattel hin zum Verschlussdeckel.

Damit einher gehen durchaus bemerkenswerte Kostenersparnisse, die vor allem deshalb in wirtschaftlicher Hinsicht bedeutsam sind, weil Scheibenbremsen als Serienteile in großen Stückzahlen hergestellt und eingebaut werden.

Neben den Vorteilen, die sich aus der geschützten Anordnung der Synchroneinrichtung in der Brücke ergeben, und zu denen auch gehört, dass ein zur Verschleißerkennung notwendiger Potentiometer innerhalb des Bremssattels angeordnet werden kann, sind auch funktionale Vorteile der neuen Scheibenbremse zu nennen. Hierzu zählt vor allem die Möglichkeit, eine Synchronisation der beiden Stellspindeln bereits vor der Komplettmontage der Bremse durchzuführen, wozu die Brücke, die Stellspindeln sowie die Synchroneinrichtung zu einer Baugruppe vormontiert sind, die sehr einfach im Bremssattel zu montieren ist.

Zur verdrehsicheren Befestigung der Treibräder an den zugeordneten Stellspindeln bei deren gleichzeitiger relativen axialen Beweglichkeit, weisen die Treibräder jeweils mindestens ein Formschlusselement auf, das an einer außenseitigen Axialführung der Stellspindel angreift. Dabei kann die Axialführung als Führungsfläche oder Axialnut ausgebildet sein, mit dem das daran angepasste Formschlusselement des Treibrades korrespondiert.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

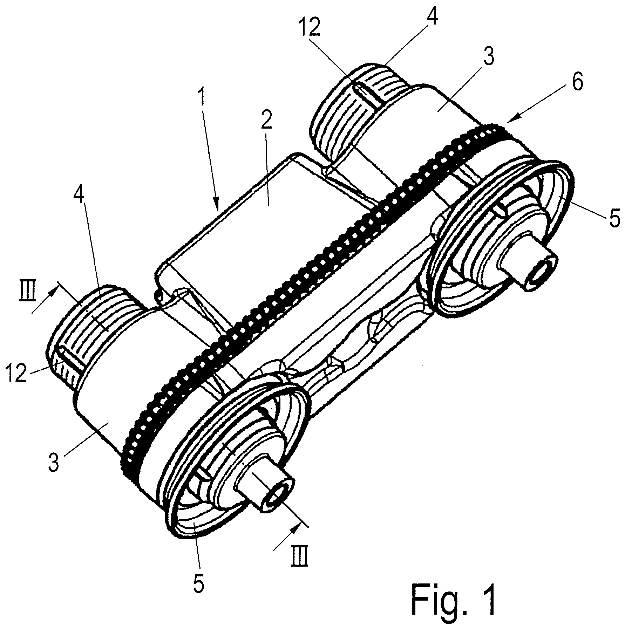

- Figur 1: einen Teil einer erfindungsgemäßen Scheibenbremse in einer perspektivischen Ansicht
- Figur 2: den Teil nach Figur 1 in einer Explosionsdarstellung

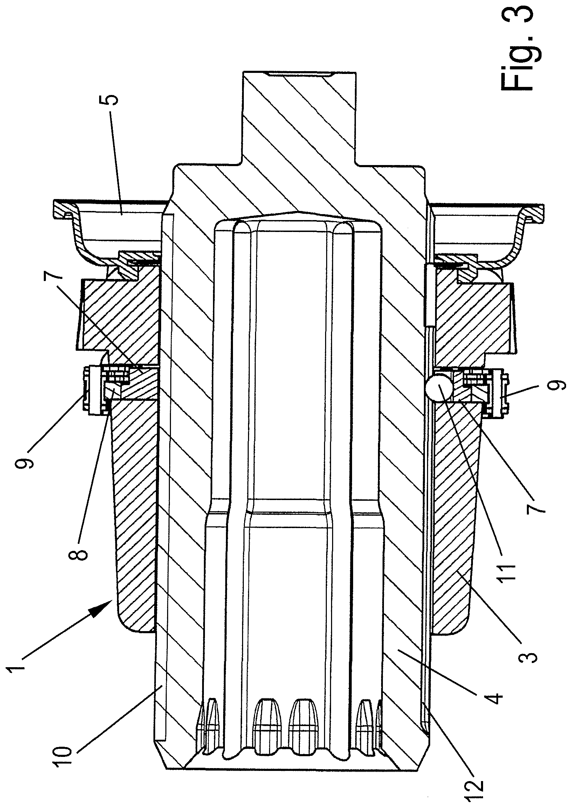

- Figur 3: einen Schnitt durch den Teil der Scheibenbremse gemäß der Linie III-III in Figur 1.

In den Figuren ist als ein Teil einer Zuspanneinrichtung einer Scheibenbremse für ein Nutzfahrzeug eine Brücke 1 dargestellt, die in einem Bremssattel der Scheibenbremse positionierbar ist und mit der Bremsbeläge an eine Bremsscheibe pressbar sind.

Hierzu sind zwei parallel und abständig zueinander angeordnete Stellspindeln 4 in Lagerbereichen 3 der Brücke 1 gehalten, die sich beidseitig an einen Druckbereich 2 anschließen, an dem ein Drehhebel der Zuspanneinrichtung anliegt. An einem Ende der Stellspindeln 4 sind Druckstücke gelagert, über die bei einer Verschiebung der Zuspanneinrichtung die Bremsbeläge an die Bremsscheibe gepresst werden.

Im Übrigen ist an sich bekannter Weise der Innenraum des Bremssattels durch eine nicht dargestellte Verschlussplatte verschlossen, die von den Stellspindeln 4 durchtreten wird und deren Durchtrittsbereich jeweils durch einen Balg 5 abgedichtet ist, der einerseits dichtend an der Stellspindel 4 anliegt und andererseits mit der Verschlussplatte verbunden ist.

Zum Ausgleich einer verschleißbedingten Änderung eines Lüftspiels zwischen dem Bremsbelag und der Bremsscheibe werden die Stellspindeln 4 über eine im Bremssattel positionierte Nachstelleinrichtung axial verstellt. Dazu sind die Stellspindeln 4 und eine Bohrung in den Lagerbereichen 3 mit ineinander greifenden Gewinden 10 versehen, so dass bei Betätigung der Nachstelleinrichtung, deren Funktionsteil in die als Gewinderohr ausgebildete Stellspindel 4 eingreift, durch Verdrehen der Stellspindel 4 axial in Richtung des Bremsbelages bewegt wird.

Um eine gleichmäßige Verstellung beider Stellspindeln 4 zu gewährleisten, ist eine Synchroneinrichtung 6 vorgesehen, mit einem Zugmitteltrieb, bestehend aus zwei Treibrädern 8 und einem Zugmittel 9, wobei jeweils ein Treibrad 8 verdrehsicher an der Stellspindel 4 und axial gesichert im Lagerbereich 3 der Brücke 1 gehalten ist.

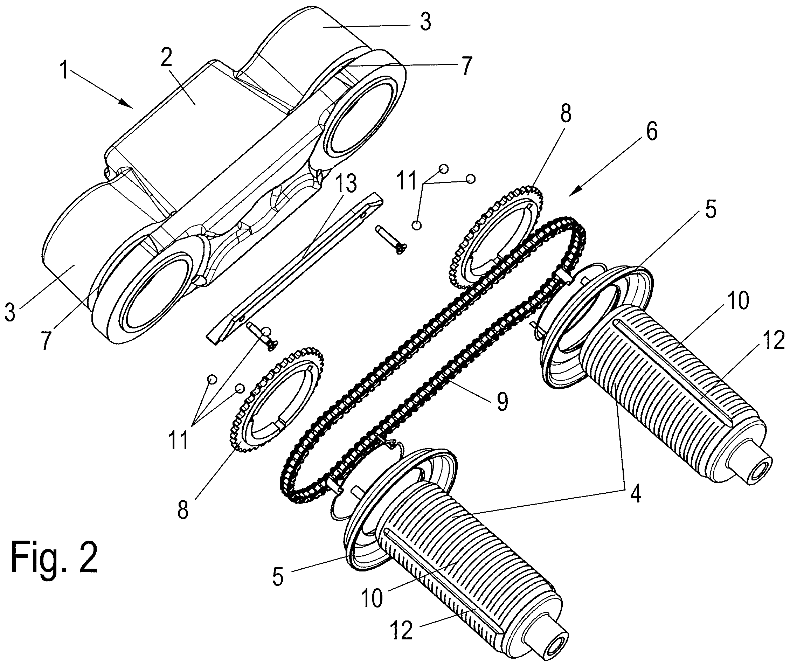

Erfindungsgemäß sind die Treibräder 8 als Getriebeelemente des Zugmitteltriebes bzw. der Synchroneinrichtung in einer oder mehreren Ausnehmung(en), hier in Querschlitzen 7 (Figur 2) in der Brücke 1 positioniert, von denen jeweils einer in einem Lagerbereich 3 vorgesehen ist. Der Begriff des Querschlitzes ist nicht zu eng zu interpretieren. Er beschreibt eine Öffnung in der Brücke mit einer Hauptrichtung/Ausdehnung senkrecht zu den Stellspindeln.

Die Treibräder 8 sind im Beispiel als Kettenräder ausgebildet, während das Zugmittel 9 dementsprechend aus einer Gliederkette besteht, die durch eine angreifend mit der Brücke 1 verbundene Spanneinrichtung 13 gespannt wird.

Um einen Freilauf sowohl der Treibräder 8 wie auch des Zugmittels 9 zu gewährleisten, ist die Breite der Querschlitze 7 geringfügig größer als die Dicke der Treibräder 8, gegebenenfalls unter Berücksichtigung von Sicherungselementen, wie einem Sprengring oder dergleichen zur Halterung der Treibräder 8 am Lagerbereich 3, und sind die Durchmesser der Treibräder 8 so dimensioniert, dass das darauf geführte Zugmittel 9 nicht in schleifenden Kontakt mit den Lagerbereichen 3 und dem Druckbereich 2 steht.

Zur relativen axialen Verschiebung der Stellspindeln 4 gegenüber den Treibrädern 8 und deren gleichzeitiger Verdrehsicherung auf den Stellspindeln 4, sind in diesen Axialnuten 12 vorgesehen, in die jeweils eine im zugeordneten Treibrad 8 gehaltene Kugel 11 als Formschlusselement eingreift.

Die Synchroneinrichtung könnte auch anders aufgebaut sein als dargestellt, so könnte sie nach einer möglichen Variante aus mehreren Zahnrädern bestehen, welche die beiden Stellspindeln koppeln.

### Bezugszeichenliste

- 1: Brücke
- 2: Druckbereich
- 3: Lagerbereich
- 4: Stellspindel
- 5: Balg
- 6: Synchroneinrichtung
- 7: Querschlitz
- 8: Treibrad
- 9: Zugmittel
- 10: Gewinde
- 11: Kugel
- 12: Axialnut
- 13: Spanneinrichtung

## Patentansprüche

1. Scheibenbremse für ein Nutzfahrzeug mit
a) einem eine Bremsscheibe übergreifenden Bremssattel,
b) einer im Bremssattel angeordneten Zuspanneinrichtung zum Andrücken wenigstens eines aktionsseitigen Bremsbelages an die Bremsscheibe,
c) zwei parallel und abständig zueinander angeordneten Stellspindeln (4), die in einer Brücke (1) an der die Zuspanneinrichtung angreift, mittels eines Korrespondenzgewindes verdrehbar gelagert sind,
d) einer im Bremssattel positionierten Nachstelleinrichtung, mit der über eine axiale Verstellung der Stellspindeln (4) eine verschleißbedingte Änderung eines Lüftspiels ausgleichbar ist, sowie
e) einer Synchroneinrichtung (6) mit dem die beiden Stellspindeln (4) synchron verstellbar sind,
**dadurch gekennzeichnet, dass**
f) die Synchroneinrichtung mit wenigstens einem Getriebeelement ganz oder teilweise in eine zumindest im Lagerbereich (3) der Stellspindeln vorgesehene und als Querschlitz ausgebildete Ausnehmung (7) in der Brücke eingreift.

2. Scheibenbremse nach Anspruch 1, **dadurch gekennzeichnet, dass** die Synchroneinrichtung (6) einen Zugmitteltrieb aufweist, welcher ein Zugmittel (9) aufweist, das kraftübertragend an Treibrädern (8) angreift, die verdrehfest mit den Stellspindeln (4) verbunden sind, wobei die Brücke (1) im Lagerbereich (3) der Stellspindeln (4) jeweils die wenigstens ein Treibrad (8) als das wenigstens eine Getriebeelement aufnehmende Ausnehmung (7) aufweist.

3. Scheibenbremse nach Anspruch 1 oder 2, **dadurch gekennzeichnet, dass** das jeweilige Treibrad (8) verschiebbar auf der zugeordneten Stellspindel (4) gehalten ist.

4. Scheibenbremse nach Anspruch 3, **dadurch gekennzeichnet, dass** das Treibrad (8) in seinem Außendurchmesser gleich, kleiner oder größer ist als das zugeordnete Abmaß des Lagerbereiches (3) und größer als eines die beiden Lagerbereiche (3) miteinander verbindenden Druckbereiches (2).

5. Scheibenbremse nach einem der Ansprüche 2 bis 4, **dadurch gekennzeichnet, dass** jedes Treibrad (8) mindestens ein Formschlusselement aufweist, das an einer außenseitigen Axialführung der zugeordneten Stellspindel (4) angreift.

6. Scheibenbremse nach Anspruch 5, **dadurch gekennzeichnet, dass** das Formschlusselement aus einer Kugel (11), einer Passfeder, einer am Innenumfang des Treibrades (8) angeformten Nase oder dergleichen besteht.

7. Scheibenbremse nach einem der Ansprüche 5 oder 6, **dadurch gekennzeichnet, dass** die Axialführung als Führungsfläche oder Axialnut (12) ausgebildet ist.

8. Scheibenbremse nach einem der Ansprüche 2 bis 7, **dadurch gekennzeichnet, dass** das Treibrad (8) mittels eines Sicherungsringes drehbar am Lagerbereich (3) befestigt ist.

9. Scheibenbremse nach einem der Ansprüche 2 bis 8, **dadurch gekennzeichnet, dass** am Zugmittel (8) eine Spanneinrichtung (13) angreift, die mit der Brücke (1) verbunden ist.

## Claims

1. Disc brake for a commercial vehicle, comprising:
a) a brake calliper encompassing a brake disc,
b) an application device located in the brake calliper for pressing at least one action-side brake pad against the brake disc,
c) two adjusting spindles (4) arranged parallel to and at a distance from one another, which are rotatably mounted by means of a correspondence weight in a bridge (1) on which the application device acts,
d) a readjustment device positioned in the brake calliper, by means of which a wear-related change of a clearance can be compensated by way of an axial adjustment of the adjusting spindles (4), and
e) a synchronising device (6), by means of which the two adjusting spindles (4) can be adjusted synchronously.
**characterised in that**
f) the synchronising device engages with at least one gearing element fully or partially with at least one recess (7) in the bridge, which recess (7) is provided in the bearing region (3) of the adjusting spindles (4) and designed as a transverse slot.

2. Disc brake according to claim 1, **characterised in that** the synchronising device (6) comprises a traction drive having a traction means (9), which acts on driving gears (8) non-rotatably connected to the adjusting spindles (4) for power transmission, wherein the bridge (1) is provided in the bearing region (3) of the adjusting spindles (4) with the recess (7) accommodating at least one driving gear (8) as the at least one gearing element.

3. Disc brake according to claim 1 or 2, **characterised in that** the respective driving gear (8) is displaceably held on the associated adjusting spindle (4).

4. Disc brake according to claim 3, **characterised in that** the driving gear (8) is in its outer diameter equal to, smaller or larger than the associated dimensional variation of the bearing region (3) and larger than a pressure region (2) connecting the two bearing regions (3) to one another.

5. Disc brake according to any of claims 2 to 4, **characterised in that** each drive gear (8) has at least one positive locking element which acts on an outside axial guide of the associated adjusting spindle (4).

6. Disc brake according to claim 5, **characterised in that** the positive locking element consists of a ball (11), a key, a hub formed on the inner circumference of the driving gear (8) or the like.

7. Disc brake according to claim 5 or 6, **characterised in that** the axial guide is designed as a guide surface or an axial groove (12).

8. Disc brake according to any of claims 2 to 7, **characterised in that** the driving gear (8) is rotatably secured to the bearing region (3) by means of a circlip.

9. Disc brake according to any of claims 2 to 8, **characterised in that** a tensioning device (13) connected to the bridge (1) acts on the traction means (8).

## Revendications

1. Frein à disque pour un véhicule utilitaire, comprenant
a) un étrier de frein chevauchant un disque de frein,
b) un dispositif de serrage monté dans l'étrier de frein, pour pousser au moins une garniture de frein du côté action sur le disque de frein,
c) deux broches (4) de réglage, qui sont montées parallèlement et à distance l'une de l'autre et qui attaquent un pontet (1) du dispositif de serrage, sont montées avec possibilité de torsion, au moyen d'un filetage de correspondance,
d) un dispositif de rattrapage, qui est placé dans l'étrier de frein et par lequel une modification, due à l'usure d'un jeu de garniture, peut être compensée ainsi que
e) un dispositif (6) de synchronisation, par lequel les deux broches (4) de réglage peuvent être déplacées en synchronisme,
**caractérisé en ce que**
f) le dispositif de synchronisation pénètre, par au moins un élément de transmission, en tout ou partie dans un évidement (7) du pontet, prévu dans la partie (3) de palier des broches de réglage et constitué sous la forme d'une fente transversale.

2. Frein à disque suivant la revendication 1, **caractérisé en ce que** le dispositif (6) de synchronisation a une transmission à moyen de traction, qui a un moyen (9) de traction, lequel attaque, avec transmission de force, des roues (8) motrices solidaires en rotation des broches (4) de réglage, le pontet (1) ayant, dans la région (3) de palier des broches (4) de réglage, respectivement la au moins roue (8) motrice comme le au moins un évidement (7) recevant un élément de transmission.

3. Frein à disque suivant la revendication 1 ou 2, **caractérisé en ce que** la roue (8) motrice est retenue coulissante sur la broche (4) de réglage associée.

4. Frein à disque suivant la revendication 3, **caractérisé en ce que** la roue (8) motrice a un diamètre extérieur égal, inférieur ou supérieur à la côte associée de la partie (3) de palier et supérieur à la partie (2) d'application d'une pression reliant entre elles les deux parties (3) de palier.

5. Frein à disque suivant l'une des revendications 2 à 4, **caractérisé en ce que** chaque roue (8) motrice a au moins un élément à complémentarité de forme, qui attaque un guidage axial du côté extérieur de la broche (4) de réglage associée.

6. Frein à disque suivant la revendication 5, **caractérisé en ce que** l'élément de complémentarité de forme est constitué d'une bille (11), d'un ressort d'ajustage, d'un bec conformé au pourtour intérieur de la roue (8) motrice ou analogue.

7. Frein à disque suivant l'une des revendications 5 ou 6, **caractérisé en ce que** le guidage axial est constitué sous la forme d'une surface de guidage ou d'une rainure (12) axiale.

8. Frein à disque suivant l'une des revendications 2 à 7, **caractérisé en ce que** la roue (8) motrice est, au moyen d'une bague de sûreté, fixée, de manière à pouvoir tourner, à la partie (3) de palier.

9. Frein à disque suivant l'une des revendications 2 à 8, **caractérisé en ce que** le moyen (8) de traction attaque un dispositif (13) de serrage, qui est relié au pontet (1).
